# EUROPÄISCHE PATENTSCHRIFT

(11) **EP 0 642 948 B1**
(45) Veröffentlichungstag und Bekanntmachung des Hinweises auf die Patenterteilung: **24.07.1996**
(21) Anmeldenummer: 94250221.2
(22) Anmeldetag: 08.09.1994
(51) Int. Cl.: B60N 2/24

(54) **Sitz, insbesondere für Fahrzeuge des öffentlichen Nahverkehrs**
Seat for local traffic vehicles
Siège pour véhicules de transport à courte distance

(30) Priorität: 10.09.1993 DE 4331206
(43) Veröffentlichungstag der Anmeldung: 15.03.1995
(73) Patentinhaber: INSTITUT FÜR SCHIENENFAHRZEUGE GmbH, D-12527 Berlin (DE)
(72) Erfinder: Neuwirth, Andrea, D-10437 Berlin (DE)
(74) Vertreter: Köhler, Reimund

(56) Entgegenhaltungen:
- EP-A- 0 251 201
- EP-A- 0 336 852
- EP-A- 0 476 977
- DE-A- 2 911 027
- DE-A- 4 201 443
- DE-U- 8 613 612
- FR-A- 1 015 669
- GB-A- 2 068 216

## Beschreibung

Die Erfindung betrifft einen Sitz, insbesondere für den öffentlichen Nahverkehr gemäß dem Oberbegriff des Anspruches 1 (s. zum Beispiel DE-A-4 201 443).

Bekannt sind Sitze für Fahrzeuge mit Gelenkbeschlägen nach DE-A-4 201 443 (A1), bei denen Sitzfläche und Lehnenteil über ein Bauteil miteinander verbunden und über jeweils zugehörige Achsen klappbar angeordnet sind. Über Anschläge werden die unterschiedlichen Positionen der Lehne zur Sitzfläche bestimmt. Die unterschiedlichen Winkel der Lehne können vom Benutzer eingestellt werden. Das Bauteil dazu ist für die werkseitige einmalige Festlegung des Lehnenneigungswinkels aufwendig und entspricht nicht den Anforderungen an den Sitz, der in verschiedenen Fahrzeugen eingesetzt werden soll. Weiterhin sind Sitze für Fahrzeuge nach EP-A-0 251 201 (A1) bekannt, die auf horizontal angeordneten Rohren festgemacht sind und werkseitig auf diesem Rohr entsprechend der gewünschten Einbauteile verschoben und befestigt werden können. Diese bekannten Sitze sind auf den horizontalen Rohren nicht klappbar und das Rohr ist kein Bestandteil eines Mechanismus zur Verstellung des Lehnenneigungswinkels.

Aufgabe der Erfindung ist es, einen Sitz, insbesondere für Fahrzeuge des öffentlichen Nahverkehrs zu schaffen, der mit einem Gelenk ausgestattet ist, das sowohl die herstellerseitige Verstellung des Lehnenneigungswinkels als auch die Realisierung von Klapp- bzw. festen Sitzen ermöglicht, unterschiedliche Sitzbreiten und unterschiedliche Formen von Sitz- und Lehnenflächen zuläßt. Aufgabe der Erfindung ist es auch, mit einem Bauteil Sitz und Rückenlehne miteinander zu verbinden und den Sitz unterschiedlichen Rohr- und Haltestangen zuzuordnen. Die verwendeten Gelenke sollen einfach aufgebaut sein, und durch Hinzufügen bzw. Auswechseln einzelner Kleinteile soll die Ausgestaltung der Sitze variierbar als Klapp- oder feste Sitze mit unterschiedlichen Neigungswinkeln möglich sein.
Die Aufgabe wird erfindungsgemäß durch die Merkmale des unabhängigen Patentanspruchs 1 gelöst. Weitere Merkmale der Erfindung sind in den abhängigen Ansprüchen angegeben. Mit nur einem Gelenk und mit dazugehörigen Hülsen sind Rückenlehnenträger und Sitz miteinander verbunden, wobei zwischen Rückenlehnträger und einer Hülse ein Formteil angeordnet ist, das die Stellung der Rückenlehne bestimmt. Durch die Hülsen des Sitzflächenträgers reicht ein Rohr, das als Befestigungsrohr ausgebildet ist. Für die Ausbildung als Klappsitz befindet sich an den Hülsen des Sitzflächenträgers ein Anschlag, der sich bei heruntergeklappter Sitzfläche an der Unterseite des Formteiles abstützt. Für den festen Sitz ist dieser Anschlag fest mit dem Formteil verbunden. Die Erfindung sieht vor, daß durch veränderte Formteile werkstattseitig verschiedene Neigungswinkel des Rückenlehnenträgers erreicht werden.

Ein Ausführungsbeispiel der Erfindung soll anhand der Zeichnung näher erläutert werden. Die Zeichnung zeigt in:
- Fig. 1:: die Seitenansicht des Sitzes,
- Fig. 2:: die perspektivische Darstellung des Gelenkes mit angedeutetem Rückenlehnenträger und Sitzflächenträger,
- Fig. 3:: der Sitz mit vorgesehener Haltestange und Haltering,
- Fig. 4:: Sitzflächenträger mit Anschlag.

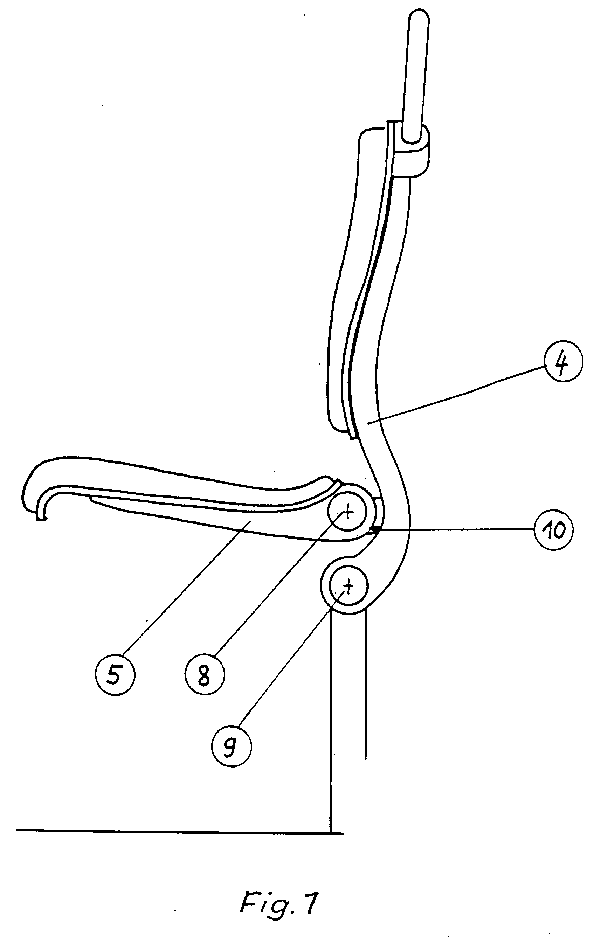

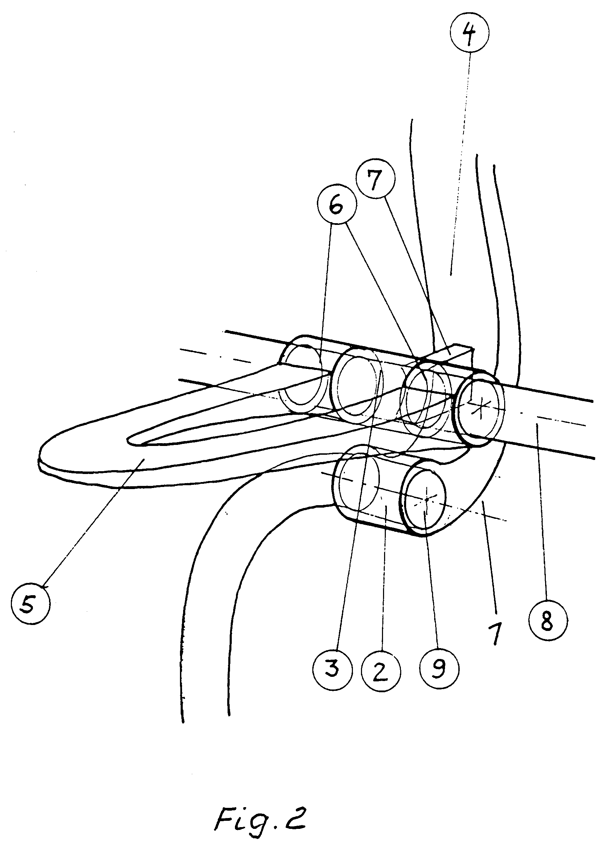

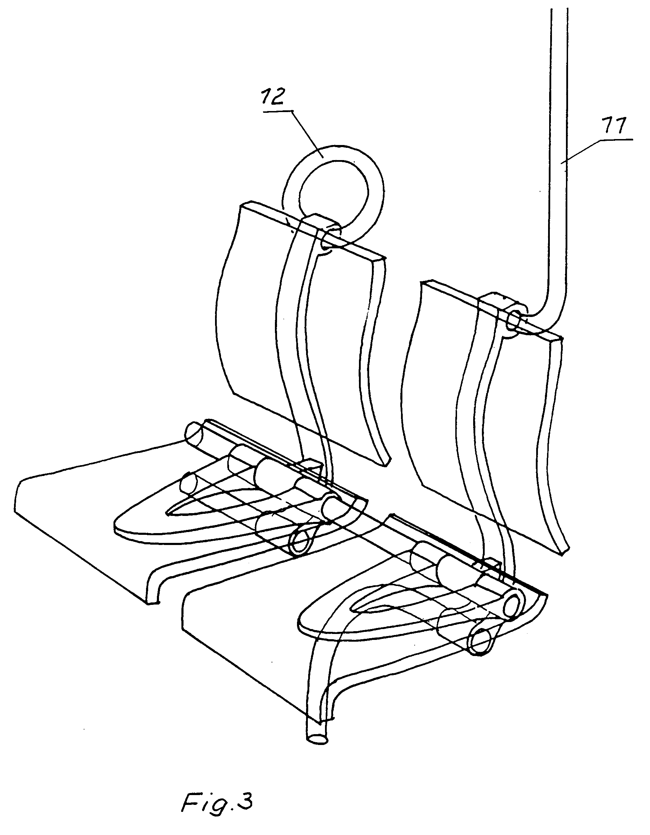

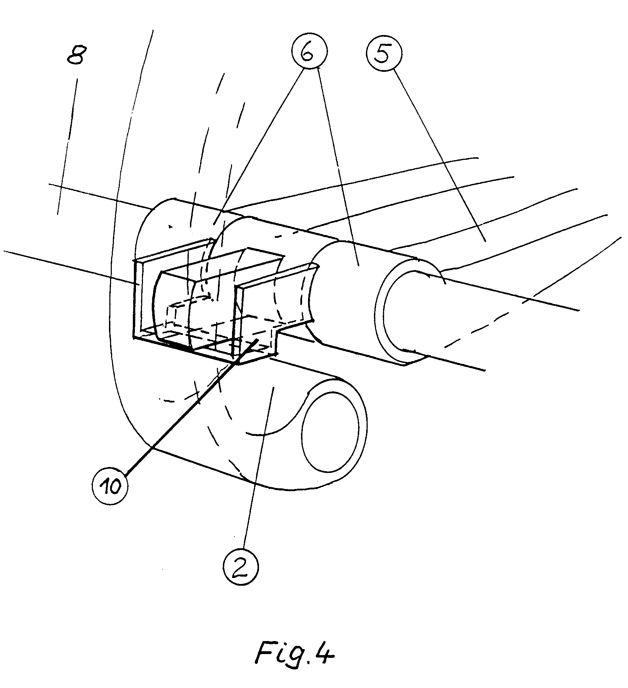

Gemäß Fig. 1 besteht der Sitz aus einem Baukastensystem, das mittels Rohren 8 und 9 mit der Wand und/oder mit dem Fußboden mit bekannten und in der Zeichnung nicht dargestellten Befestigungsmitteln verbunden ist. Nach Fig.2 nehmen die Rohre 8 und 9 ein Gelenk 1 auf. Das Gelenk 1 besteht aus zwei Hülsen 2;3, wobei die erste Hülse 2 am Rückenlehnenträger 4 und die zweite Hülse 3 oberhalb der ersten Hülse 2 fest mit dem Rückenlehnenträger 4 durch das Formteil 7 verbunden ist. Am oberen Teil des Gelenkes 1 ist der Sitzflächenträger 5 klappbar gelagert. Der untere Teil des Gelenkes 1 nimmt den Rückenlehnenträger 4 so auf, daß er klappbar ist und mittels eines Formteiles 7, das zwischen Gelenk 1 und Rückenlehnenträger 4 befestigt wird, vom Hersteller im gewünschten Winkel arretiert werden kann. Gleichzeitig stützt sich bei der klappbaren Variante gemäß Fig.4 an der Unterseite des Formteiles 7 der an den weiteren Hülsen 6 befestigte Anschlag 10 ab. Durch die Hülsen 6 des Sitzflächenträgers 5 reicht das Rohr 8, das als Befestigungsrohr ausgebildet ist. Das Baukastensystem ermöglicht die Anbringung verschiedener Lehnen an den Rückenlehnenträger 4 und verschiedene Sitzflächen an den Sitzflächenträger 5 mit unterschiedlichen Formen, wobei in der Auswahl der Sitzflächen und Rückenlehnen verschiedene Komfortstufen vorgesehen werden können. Vorteilhaft wirkt sich bei dieser Konstruktion die einfache Austauschbarkeit auch bei Beschädigungen aus. Mit dem erfindungsgemäßen modularen Aufbau kann beliebig variiert werden. Bei fester Verbindung zwischen dem Formteil 7 und dem Sitzflächenträger 5 entsteht ein fester Einzelsitz. Bei losem Aufliegen des Anschlages 10 an dem Formteil 7 bleibt die Sitzfläche klappbar. Durch unterschiedliche Ausbildung des Formteiles 7 können verschiedene Rückenlehnenneigungswinkel realisiert werden. Gemäß Fig. 3 enthält der obere Bereich des Rückenlehnenträgers 4 eine Aufnahme für eine Haltestange 11. Die Ausbildung eines Haltegriffes 12 als geschlossener Ring oder als zur Decke gehende Haltestange 11 wird dadurch möglich. Die Erfindung ist für eine vielseitige werkseitige Einstellung verschiedener Sitzwinkeleinstellungen und für eine Auswahl unterschiedlicher Sitzbauelemente besonders geeignet. Die jeweiligen Befestigungen erfolgen mit bekannten Mitteln. Die Anpassung verschiedener Breiten ist einfach zu bewerkstelligen und alle verwendeten Bauelemente sind in ihrer konstruktiven Ausbildung einfach, unkompliziert und ökonomisch herstellbar und außerdem sind alle verwendeten Elemente in ihrem Formengebrauch verständlich bei der Montage und auch im Gebrauch durch den Fahrgast selbst.

### Aufstellung der verwendeten Bezugszeichen

- 1: Gelenk
- 2: Erste Hülse
- 3: Zweite Hülse
- 4: Rückenlehnenträger
- 5: Sitzflächenträger
- 6: Hülsen des Sitzflächenträgers
- 7: Formteil
- 8: Rohr
- 9: Rohr
- 10: Anschlag
- 11: Haltestange
- 12: Haltegriff

## Patentansprüche

1. Sitz, insbesondere für Fahrzeuge des öffentlichen Nahverkehrs, mit einem die Sitzfläche und Rückenlehne verbindenden Bauteil, das als Gelenk (1) ausgebildet ist und unterschiedliche Positionen der Rückenlehne bzw. der Sitzfläche zuläßt, dadurch gekennzeichnet, daß das Gelenk (1) mit zwei Hülsen (2;3) komplettiert wird, wobei die erste Hülse (2) am Rückenlehnenträger (4) befestigt ist und die zweite Hülse (3) oberhalb der ersten Hülse (2) fest mit dem Rückenlehnenträger (4) über ein Formteil (7) verbunden ist und ein Sitzflächenträger (5) mit seinen zwei weiteren Hülsen (6) mit der zweiten Hülse (3) korrespondiert und diese zweite und weiteren Hülsen (3 und 6) durch ein oberes Befestigungsrohr (8) miteinander verbunden sind und die erste Hülse (2) mit einem Rohr (9) fest verbunden ist und die Stellung des Sitzflächenträgers (5) über einen Anschlag (10) festgelegt ist.

2. Sitz nach Anspruch 1, dadurch gekennzeichnet, daß das Formteil (7) werkseitig austauschbar angeordnet ist.

3. Sitz nach Anspruch 1, dadurch gekennzeichnet, daß für den festen Sitz der Anschlag (10) fest mit dem Formteil (7) verbunden ist.

## Claims

1. Seat, in particular for local public transport vehicles, having a component which connects the seat panel and backrest, is designed as an articulation (1) and permits different positions of the backrest and seat panel, characterized in that the articulation (1) is completed by two bushings (2;3), the first bushing (2) being fastened on the backrest carrier (4) and the second bushing (3) being firmly connected, above the first bushing (2), to the backrest carrier (4) via a shaped part (7), and a seat-panel carrier (5) corresponding to the second bushing (3) by way of its two further bushings (6) and said second and further bushings (3 and 6) being connected to one another by a top fastening tube (8) and the first bushing (2) being firmly connected to a tube (9), and the position of the seat-panel carrier (5) being secured via a stop (10).

2. Seat according to Claim 1, characterized in that the shaped part (7) is arranged such that it can be interchanged at the factory.

3. Seat according to Claim 1, characterized in that, for the fixed seat, the stop (10) is firmly connected to the shaped part (7).

## Revendications

1. Siège, notamment pour véhicules de transport public à courte distance, comprenant une pièce reliant l'assise et le dossier, qui est conçue sous la forme d'une charnière (1) et permet différentes positions du dossier ou de l'assise, caractérisé en ce que la charnière (1) est complétée par deux douilles (2; 3), la première douille (2) étant fixée au support de dossier (4) et la deuxième douille (3) étant reliée, au-dessus de la première douille (2) rigidement au support de dossier (4) par l'intermédiaire d'une pièce de forme (7) et un support d'assise (5) correspond grâce à ses deux douilles supplémentaires (6) avec la deuxième douille (3) et cette deuxième douille ainsi que les douilles supplémentaires (3 et 6) sont reliées l'une à l'autre par un tube de fixation supérieur (8) et la première douille (2) est reliée rigidement à un tube (9) et la position du support d'assise (5) est définie par une butée (10).

2. Siège suivant la revendication 1, caractérisé en ce que la pièce de forme (7) est montée de manière à pouvoir être échangée en atelier.

3. Siège suivant la revendication 1, caractérisé en ce que, pour obtenir un siège fixe, la butée (10) est reliée rigidement à la pièce de forme (7).
